# EUROPÄISCHE PATENTSCHRIFT

(11) **EP 1 670 317 B1**
(45) Veröffentlichungstag und Bekanntmachung des Hinweises auf die Patenterteilung: **09.07.2008**
(21) Anmeldenummer: 04761925.9
(22) Anmeldetag: 16.09.2004
(51) Int. Cl.: A21D 2/18, A21D 2/26, A21D 13/02, A21D 8/04

(54) **VORTEIGKONZENTRAT FÜR WEIZEN- UND MISCHBROTE UND HERSTELLUNGSVERFAHREN**
PRE-DOUGH CONCENTRATE FOR WHEATEN BREAD AND MIXED FLOUR BREAD AND METHOD FOR ITS PREPARATION
CONCENTRÉ DE LEVAIN POUR PAINS BLANCS ET FONCÉS ET MÉTHODE POUR SA PRÉPARATION

(30) Priorität: 08.10.2003 DE 10347250
(43) Veröffentlichungstag der Anmeldung: 21.06.2006
(73) Patentinhaber: PANADORO GROUP AG, 6304 Zug (CH)
(72) Erfinder: BURGERMEISTER, René, 9507 Stettfurt (CH); ZEHNDER, Bruno, 9535 Wilen b. Wil (CH); MEIERT, Johan, Grootes, 6332 Hagendorn (CH)
(74) Vertreter: Schneider Feldmann AG Patent- und Markenanwälte
(86) Internationale Anmeldenummer: PCT/CH2004/000585
(87) Internationale Veröffentlichungsnummer: WO 2005/032260

(56) Entgegenhaltungen:
- EP-A- 1 101 413
- EP-A- 1 352 564
- WO-A-00/02457
- DE-A- 2 837 294
- GB-A- 1 420 856
- LAI C S ET AL: "EFFECTS OF WHEAT BRAN IN BREADMAKING" 1. Mai 1989 (1989-05-01), CEREAL CHEMISTRY, AMERICAN ASSOCIATION OF CEREAL CHEMISTS. MINNEAPOLIS, US, PAGE(S) 217-219 , XP000027166 ISSN: 0009-0352 Zusammenfassung Seite 319, Spalte 2, Absätze 2,3

## Beschreibung

Die vorliegende Erfindung betrifft ein Vorteigkonzentrat zur Herstellung von Backwaren gemäss Oberbegriff des Patentanspruches 1, ein Verfahren zur Herstellung eines Vorteigkonzentrates gemäss Oberbegriff des Anspruches 13, sowie die Endteige, welche mit einem solchen Vorteigkonzentrat hergestellt sind gemäss Oberbegriff des Anspruches 10.

Erst im 18. und 19. Jahrhundert entstanden die hochgezogenen Brote mit porenreicher Krume, wie sie heute noch allgemein bekannt sind. Unter Verwendung von Hefe, die vor ca. 150 Jahren in Wien erfunden wurde, wurde aus Mehl und Wasser ein Hebel oder Vorteig hergestellt, der meistens über Nacht bei Raumtemperatur in speziellen Behältnisse fermentiert wurde. Dadurch wurde die damals schwach treibende Hefe vermehrt und in ihrer Leistung gestärkt. Mengenmässig macht der Vorteig 25-40% der Gesamtteigmenge aus.

Der Vorteig hat generell folgende Funktionen:
➢ Bildung von Milch- und Essigsäuren zur Kleberstabilisierung, zur Verbesserung der Brotfrischhaltung, sowie zum Schutz vor dem Fadenbazillus;
➢ Hefevermehrung;
➢ Bessere Einlagerung des Wassers durch die Vorquellung und Aufschliessung der kleberbildenden Eiweissstoffe;
➢ Bildung von Vorstufen von Brotaromastoffen durch den enzymatischen Abbau von Eiweiss, Fett und Stärke.

Dadurch war es schon damals möglich, voluminöse, aromatische und mehrere Tage haltbare Brote zu produzieren.

In den 50er-Jahren des letzten Jahrhunderts begann mit der zunehmenden Industrialisierung die Ära der Backmittel. Anfangs waren es reine Malzprodukte und Säuren, z.B. Essig. Diese dienten zur Verbesserung von qualitativ schlechten Weizen- und Roggenmehlen und wurden direkt dem Hauptteig zugesetzt. Anfang der 70er-Jahre haben Bäckereien aus organisatorischen- und Kapazitätsgründen sukzessive auf die direkte Teigführung d.h. ohne Vorteig umgestellt. Ohne die Zugabe von Backmitteln konnte dieser Schritt von indirekter auf direkte Teigführung damals nicht vollzogen werden. Die für diesen Zweck benötigten Backmittel bestanden meistens aus Malzprodukten, vielfach ergänzt mit Säuren (z.B. Zitronensäure, Ascorbinsäure), Calciumphosphaten, Lecithin (E322) als Emulgator und Ascorbinsäure (Ascorbinsäure). Die heutigen Backmittel entsprechen noch weitgehend dieser Zusammensetzung. Anstelle von Malzprodukten und Lezithin wird heute eine Kombination von biotechnologisch hergestellten Enzymen, Quellstoffen wie Weizenquellmehl oder Guarkernmehl (E412) und/oder Emulgatoren wie z.B. Diacetylweinsäureester (E472e), destillierte Monoglyzeriden (E471) usw., eingesetzt.

In der EP-A-1094715 ist ein mehrstufiger Fermentationsprozess für ein Vorteigkonzentrat, das Kleie und Kleber enthält offenbart, erhältlich durch enzymatische Hydrolyse mit einer Glucosidase und/oder einer Glycanase. Dies erfolgt bei einer Temperatur unterhalb 80°C wobei auch pasteurisierte werden soll. Nachfolgend wird das Vorteigkonzentrat auf weniger als 40°C gekühlt. Dieses gekühlte Produkt wird mit Hefe und Milchsäurebakterien versetzt und bei einer Temperatur unterhalb von 45°C weiter vergoren.

Die vielen Skandale in der Nahrungsmittelindustrie haben dazu geführt, dass der Konsument vermehrt naturnahe Produkte sucht. Das Umsatzwachstum bei Bioprodukten in den letzten Jahren belegt diese Entwicklung. Insbesondere bei Produkten des täglichen Bedarfs, wie z.B. Brot, kommt daher vermehrt der Wunsch, diese ohne Backmittel herzustellen. Nicht nur die Staubbildung bei der Anwendung (Allergien), sondern auch die vielen unerwünschten, oft sogar als gesundheitsschädlich empfundenen Zusatzstoffe führen zu einer immer stärkeren Ablehnung dieser Produkte.

Eine von den wenigen Möglichkeiten, Brot ohne Backmittel herzustellen, ist ein zurück zur klassischen Hebel- oder Vorteigmethode. Es gibt dabei eine Methode mit und eine ohne zugesetzte Hefe zur Vorteigherstellung. Die Methode mit zugesetzter Hefe ist heute am Verbreitesten, weil die Alternativemethode ohne Zugabe von Hefe, wie z.B. bei der Madre-/Säuerteigherstellung noch viel aufwändiger ist.

Da die benötigte Vorteigmenge ca. 25-40% der Gesamtteigmenge beträgt, handelt es sich bereits bei einem kleineren Bäckereibetrieb um grosse Mengen Hebel, die hergestellt werden müssen. Vorteig hat gegenüber Backmittel Vorteile in Bezug auf Geschmack, Geruch, Krumenbeschaffenheit und Frischhaltung. Trotz dieser Vorteile ist der Einsatz von Vorteig sowohl bei handwerklicher Herstellung als auch bei Industriebetrieben nach wie vor beschränkt.

Dies wird vor allem verursacht durch folgende Voraussetzungen, die bei einer optimalen Vorteigteigproduktion gegeben sein müssen: stabile Mikro-Flora vom Vorferment (nur bei Madre), eine konstante Qualität der Rohstoffe (vor allem vom Mehl - enzymatische Aktivität, Aschegehalt usw.), eine genaue Überwachung der Fermentationsparameter (wie Temperatur, Zeit), eine strikte Hygienekontrolle, eine permanente Analyse von pH-Wert, Säuregrad und Aroma, gut ausgebildetes Personal, genaueste Produktionsplanung (keine Flexibilität) und bei Industriebetrieben hohe Investitionskosten.

Eine unkontrollierte Fermentation führt zu einer unregelmässigen Brotqualität, Nebengeschmack, geringem Brotvolumen und sogar zu starker Übersäuerung des Brotes. Zudem wurde in der Praxis festgestellt, dass mit Hebel hergestellte Teige nicht immer sämtliche gewünschten Eigenschaften von Backmittel-Teigen aufweisen. Ist dies der Fall, so kann die Backmittelmenge nur reduziert aber nicht eliminiert werden.

Aus den obenerwähnten Gründen besteht das Bedürfnis, nach einer geeigneten Alternative sowohl für Backmittel, als auch für Vorteig. Es ist daher die Aufgabe der vorliegenden Erfindung eine Zusammensetzung zur Verwendung bei der Herstellung von Bäckereiprodukten zur Verfügung zu stellen, die die oben genannten Nachteile von herkömmlichen Vorteigen und Backmitteln nicht aufweist. Zudem sollen vorteilhafte Verwendungen der Zusammensetzung zur Herstellung von Backwaren zur Verfügung gestellt werden.

Das erfindungsgemässe Vorteigkonzentrat soll in Hinblick auf die Anwendung in Bäckereien eine geringe Dosierung (max. 5% auf die Mehlmenge), eine einfache Handhabung und nicht zuletzt eine genügende Haltbarkeit aufweisen. Des weiteren soll die Akzeptanz des Vorteigkonzentrates durch sehr gute Verarbeitungseigenschaften (kurze Teigreifezeit), eine Verbesserung der backtechnischen Eigenschaften (schneller Ofentrieb, hohes Backvolumen, schöne Krustenfärbung) sowie eine Verbesserung der sensorischen Eigenschaften (Geruch, Geschmack, Kauempfinden), erhöht werden.

Schliesslich wird ein breites Einsatzgebiet, d.h. in verschiedensten Rezepturen mit unterschiedlichen Mehltypen und Mehlqualitäten, angestrebt. Dies wird nicht zuletzt durch die brottypspezifische Geschmacksverstärkung ermöglicht, d.h. Ruchbrot wird im Ruchbrotgeschmack, Weissbrot dagegen im Weissbrotgeschmack verstärkt.

Bei der Mehlherstellung fallen grosse Mengen Kleie an, die sich kommerziell nur unbefriedigend nutzen lassen. Zwar sind die ernährungsphysiologischen Vorteile von Kleie bekannt und allgemein akzeptiert, allerdings sind sie in höheren Dosen auf Grund ihres Geschmackes wenig beliebt.

Es gibt verschiedene Möglichkeiten, Kleie zu modifizieren. Erstens eine mechanische Modifizierung durch Feinzerkleinerung, zweitens eine thermische Modifizierung, vorzugsweise durch eine thermopneumatische Behandlung, und drittens eine mechanischthermische Modifizierung durch Extrusion (z.B. in Zweiwellen-Extrudern der Fa. Bühler/Uzwil). Ziel dieser Behandlungen ist es einerseits die Haltbarkeit zu verlängern sowie andererseits Mundgefühl, Geschmack und Geruch von Speisekleie zu verbessern.

In der WO 02/15711 ist ein weiteres Verfahren zum Aufbereiten von Kleie, insbesondere Weizenkleie, beschrieben, bei dem in der Kleie die vorwiegend Aleuron enthaltenden Bestandteile von den nicht Aleuron enthaltenden Bestandteilen getrennt werden. Die Ablösung kann biochemisch-enzymatisch und/oder mechanisch-abrasiv erfolgen. Bei der üblichen müllereitechnischen Trennung von Mehlkörpern und Schalen verbleibt die Aleuronschicht bei der Schale, zusammen mit Fruchtschale und Samenschale, und wird als Kleiebestandteil, wie bereits oben erwähnt, als Speise- oder Futterkleie weiterverwendet. Wird die Aleuronschicht, wie in der WO02/15711 offenbart, von der Samenhaut getrennt, so verbleibt eine im Vitamin-, Mineralien-, Rohfett- und Rohprotein-Gehalt verminderte Restkleie, während andererseits Fasergehalt und Stärkeanteil erhöht sind. Je nach Aleuronausbeute weist die Restkleie zum Beispiel 20% weniger Protein und bis zu 50% weniger Mineralstoffe auf. Die Partikelgrössen der mechanisch oder mechanisch und thermisch modifizierten Restkleiepartikel liegt vorzugsweise bei 200-800 µm, besonders bevorzugt um die 300 µm. Es ist vorteilhaft, wenn die mechanische Einwirkung auf die Kleie in Form von Scherkräften erfolgt. Dies kann zum Beispiel dadurch geschehen, dass die Flüssigkeit in der die Kleie geführt ist, in eine Kolloidmühle eingeleitet wird, von der dann die Scherkräfte aufgebracht werden, oder es kann eine mechanisch-thermische Modifizierung mittels eines Extruders erfolgen.

Im erfindungsgemässen Vorteigkonzentrat wird die Getreidekleie einer neuen Verwendung zugeführt. Das Vorteigkonzentrat gemäss der vorliegenden Erfindung basiert auf mechanisch, thermisch, vorzugsweise thermopneumatisch, und/oder thermisch-mechanisch modifizierter Getreidekleie oder Teilen davon, ergänzt mit Hefe und ggf. Ascorbinsäure oder dergleichen. Das Vorteigkonzentrat ist ein Ersatzprodukt für den Vorteig/Hebel mit je nach Kriterium ähnlichen, gleichen oder besseren funktionellen Eigenschaften, wie ein guter Vorteig aus den jeweiligen Ruch-, Halbweiss- und Weissmehlen. Das Vorteigkonzentrat unterscheidet sich ausserdem wegen der vorhandenen Bioaktivität deutlich von den im Markt erhältlichen Backmitteln.

Das neue Vorteigkonzentrat wird vorzugsweise als Paste oder Flüssigprodukt angeboten. Die Dosierung des Vorteigkonzentrates beträgt nur ca. 1/6 bis 1/7 der Vorteig/Hebelmenge. Diese vorteilhafte, niedrige Dosierung wird erreicht durch die anteilmässige Erhöhung der für die Fermentation wichtigen Inhaltsstoffe. Ihre Funktionen werden nachfolgend beschrieben:
➢ Getreideeigene Faserstoffe; diese dienen erstens einem für die Fermentation optimalen Wassergehalt und zweitens einer guten Frischhaltung der Backwaren.
➢ Getreideeigene Fettstoffe; diese, über die Fermentation teilweise abgebauten Stoffe sind Vorstufen für die Geruchs- und Geschmacksbildung im Gebäck.
➢ Getreideeigene Stärke- und Zuckerstoffe; diese dienen einem optimalen Fermentationsprozess des Vorteigkonzentrates sowie im Hauptteig für die Hefenahrung. Beim Gebäck bringen vor allem die Zuckerstoffe eine gute Färbung, Krustenaromabildung und Frischhaltung.
➢ Getreideeigene Eiweissstoffe; auch diese, über die Fermentation teilweise abgebauten Eiweissstoffe sind Vorstufen für die Geruchs- und Geschmacksbildung im Gebäck.
➢ Getreideeigene Mineralstoffe; deren funktionale Eigenschaften wirken sich, speziell im Vorteigkonzentrat für "dunkle" Brote durch die Verstärkung eines typischen Ruchbrotgeruchs und Brotgeschmacks aus.

Durch die Beigabe von Ascorbinsäure zur Paste wird ein natürlicher Oxidationsschutz erreicht, der einer mehrtägige Haltbarkeit der fermentierten, gekühlten Paste gewährleistet. Gleichzeitig aktiviert, stabilisiert und schützt Ascorbinsäure auch den Kleber bei der Führung des Hauptteiges.

Der Einsatzbereich des Vorteigkonzentrates liegt vorzugsweise bei der Herstellung von hellen und dunklen Broten, Brötchen und Feingebäcken auf Basis Getreidemehlen, insbesondere Weizenmehlen oder Weizenmischmehlen.

Es wird im folgenden hauptsächlich von zwei verschiedenen Vorteigkonzentrat-Typen die Rede sein:
➢ "dunkel" für alle dunklen Gebäckssorten wie Vollkornbrot, Ruchbrot, Ciabatta etc.
➢ "hell" für alle hellen Gebäckssorten wie Weissbrot, Halbweissbrot, Baguette, Brötchen, Zöpfe, Weggli, Gipfel, Pizza, Ciabatta etc.
   Allgemein kann das Produkt für alle ganz- oder teilweise hefegetriebenen Gebäcke eingesetzt werden. Bei stark roggenhaltigen Gebäcken (>60-65% Roggenmehlanteil) wird, um die Backfähigkeit zu gewährleisten, dem Vorteigkonzentrat zusätzlich ein Säuerungsmittel zugegeben.

Generell können mit Einsatz des neuen Vorteigkonzentrates bei allen hefegetriebenen Gebäcke die bestehenden Grundrezepte beibehalten werden. Zu korrigieren ist jedoch folgendes:
➢ Das Backmittel ist durch die gemäss Empfehlung angegebene Menge Vorteigkonzentrat zu komplett ersetzen.
➢ Enthält das Backmittel, nebst den backfördernden Stoffen, weitere rezeptbedingte Zutaten wie Milchpulver, Fettstoffe, Zucker, etc., sind diese in der erforderlichen Menge zusätzlich beizufügen.
➢ Die Hefemenge ist um ca. 10 bis 30 % reduzieren, sofern die Prozessparameter nicht verändert werden.
➢ Die Teigfestigkeit ist durch Erhöhung der Wasserschüttmenge anzupassen, wobei dies nur bei Ersatz von Backmitteln mit quellenden Zutaten wie Guar- oder Quellmehlen erforderlich ist.

Das erfindungsgemässe Vorteigkonzentrat eignet sich für alle bekannten Teigführungs- und Backsysteme wie die Gärverzögerungs- und Gärunterbrechungsmethode, das PATT-System sowie alle Vorback-, Kühl- und Tiefkühlsysteme.

Die folgenden Angebotsformen haben sich als vorteilhaft für den Markt erwiesen:
➢ "pastenförmig"; für Bäckereien mit manueller Verwiegung
➢ "flüssig", für Bäckereien mit automatischer Zudosierung

Beide Produkte werden auch mit voll integriertem Hefeanteil, d.h. als sogenannte "All-in-One" Produkte angeboten.

Neben den oben bereits erwähnten gewünschten Eigenschaften zeichnet sich das erfindungsgemässe Vorteigkonzentrat durch eine Beschleunigung der Teigentwicklung, eine Optimierung der Verarbeitungseigenschaften der Teige und die Förderung der sensorischen Eigenschaften der Gebäcke aus. Dies kommt vor allem beim besseren und stärkeren Gebäckgeruch und Geschmack, sowie bei den angenehmeren Verzehrseigenschaften wie einer kürzeren, mürberen Kruste und Krume zur Geltung.

Der Gefrierpunkt liegt beim pastenförmigen Vorteigkonzentrat bei ca. -5° C beim Flüssigprodukt bei ca. -3°C. Das Vorteigkonzentrat soll optimalerweise zwischen 0 - 7°C gelagert werden. Da die Fermentation jedoch in reduziertem Ausmass weitergeht, sollte das Produkt, vorzugsweise mit Kaltluft umströmt gelagert werden. Das Vorteigkonzentrat wird dem Endkunden mit einem optimalen Fermentationsgrad, mit einer Temperatur von unter 6° C, in Einweg- oder Mehrweggebinden mit Plastikeinlage oder in einem Container angeliefert. Die Haltbarkeit bei ordnungsgemässer Lagerung liegt bei ca. 10-20 Tagen.

### Herstellung:

Das neue Vorteigkonzentrat ist ein natürliches Brotverbesserungsmittel. Es umfasst mechanisch, thermisch oder thermisch-mechanisch modifizierte Getreidekleie, Hefe und Ascorbinsäure als Basis, wie beansprucht. Gemälztes Getreide, vorzugsweise in Form von Malzmehl, Weizenkleber, Enzyme und Wasser können optional zugegeben und zu einer Paste gemischt werden. Die Paste wird vorzugsweise zwischen 0 und 6 Stunden bei ca. 26° bis 32°C fermentiert. Anschliessend wird das Produkt rasch auf ca. 0 - 4°C abgekühlt. Je nach zugeführter Wassermenge kann eine Paste oder ein Flüssigprodukt hergestellt werden. Beim flüssigen Produkt wird nach dem Kühlprozess unter leichtem Rühren Eiswasser zugeführt, bis die gewünschte Viskosität erreicht wird. Die nun pumpfähige Lösung wird dann wie bereits beschrieben verpackt und gelagert.

Das Vorteigkonzentrat wird unter Einsatz von normaler Presshefe, Hefemilch, dem bei der Presshefe anfallenden Filtrat oder einem Gemisch davon, fermentiert. Es werden keine künstlichen Säuren wie z.B. Essig-, Milchsäure oder Starterkulturen verwendet.

Vorzugsweise umfasst das erfindungsgemässe Vorteigkonzentrat für "dunkle" Teige:
➢ thermisch und/oder mechanisch behandelte Getreidekleie, mit zumindest reduziertem Aleuronanteil, insbesondere extrudierte (140-180°C, vorzugsweise 160°C; Partikelgrösse 250-310µm, vorzugsweise 280 µm) Kleie, vorzugsweise Weizenkleie
➢ Gemälzte Getreideprodukte, vorzugsweise Malzmehl
➢ Vorzugsweise Ascorbinsäure
➢ Weizenkleber
➢ Hefe; wobei die Hefe Presshefe (ca. 28% Trockensubstanz TS) und/oder Hefemilch (20% TS) umfasst, und vorzugsweise auch das bei der Presshefe-Herstellung anfallende Filtrat
➢ Enzyme
➢ Wasser

Vorzugsweise umfasst das erfindungsgemässe Vorteigkonzentrat für "helle" Teige:
➢ thermisch und/oder mechanisch behandelte Getreidekleie mit zumindest reduzierten Aleuronanteil, insbesondere extrudierte (140-180°C, vorzugsweise 160°) und/oder aleuronreduzierte Getreidekleie (Partikelgrösse 60-125µm, vorzugsweise 75µm), vorzugsweise Weizenkleie
➢ Gemälzte Getreideprodukte, vorzugsweise Malzmehl
➢ Vorzugsweise Ascorbinsäure
➢ Weizenkleber
➢ Hefe; wobei die Hefe Presshefe (ca. 28% Trockensubstanz TS) und/oder Hefemilch (20% TS) umfasst, und vorzugsweise auch das bei der Presshefe-Herstellung anfallende Filtrat
➢ Enzyme
➢ Wasser

Die Trockenstoffe werden zusammengewogen und gemischt. Anschliessend werden die Flüssigkeiten mit einer Ausgangstemperatur von ca. +3°C beigegeben und mit den Trockenstoffen zu einer Paste vermischt. Die frisch produzierte Paste mit einer Ausgangstemperatur von ca. 12°C bis 14°C beginnt sich sofort zu fermentieren und die Temperatur erhöht sich durch die Fermentationswärme rasch auf 25 bis 32° C. Um eine Übererwärmung (insbesondere über 36°C), die zur Essigsäureentwicklung führen kann, zu vermeiden, soll die Kühlung möglichst schnell einsetzen. Beim Batch-Verfahren soll während des Fermentationsprozesses ein Rühren oder Bearbeiten der Paste möglichst unterlassen werden, da dadurch die gebildeten CO₂-Gase frei werden und die Fermentation und Erwärmung wieder beschleunigt wird. Beim kontinuierlichen Verfahren soll die Bearbeitung möglichst schonend erfolgen.

Wird die Paste anschliessend in mit Plastikfolie ausgelegte Kunststoff-Gittergebinde (Masse 40 x 60 cm) portioniert, und in einem mit Kaltluft von ca. 0°C stark umströmten Ort gekühlt, wird in ca. 24 Std. eine Pastentemperatur von ca. 0 - 4°C erreicht. Diese Temperatur genügt um den Fermentationsprozess auf ein Minimum zu reduzieren.

### Beispiele:

**a) Pastenförmiges Vorteigkonzentrat für "dunkle" Teige**

| Vorteigkonzentrat "dunkle" Paste | bevorzugt | minimal | maximal |
|---|---|---|---|
| | % | % | % |
| Weizenkleie-Extrudat | 35.0 | 10 | 50 |
| Diastase-Malzmehl | 9.0 | 0 | 20 |
| Weizenkleber | 4.0 | 0 | 10 |
| Ascorbinsäure | 0.4 | 0.1 | 1.0 |
| Enzyme | 0.1 | 0 | 0.4 |
| Hefemilch | 10 | 1 | 50 |
| Hefefiltrat/Wasser | 41.5 | 0 | 60 |
| Total | 100 | | |

**b) Pastenförmiges Vorteigkonzentrat für "helle" Teige**

| Vorteigkonzentrat "helle" Paste | bevorzugt | minimal | maximal |
|---|---|---|---|
| | % | % | % |
| Weizenkleie-Extrudat oder aleuronreduzierte Weizenkleie | 15 | 5 | 30 |
| Diastase-Malzmehl | 25.5 | 0 | 40 |
| Weizenkleber | 7.6 | 0 | 10 |
| Ascorbinsäure | 0.3 | 0.1 | 1.0 |
| Enzyme | 0.1 | 0 | 0.4 |
| Hefemilch | 10 | 1 | 50 |
| Hefefiltrat/Wasser | 41.5 | 0 | 60 |
| Total | 100 | | |

**c) Vorteigkonzentrat-Suspension für "dunkle" Teige**

| Vorteigkonzentrat "dunkle" Suspension | bevorzugt | minimal | maximal |
|---|---|---|---|
| | % | % | % |
| Weizenkleie-Extrudat | 23.0 | 6 | 33 |
| Diastase-Malzmehl | 6.0 | 0 | 15 |
| Weizenkleber | 2.7 | 0 | 6 |
| Ascorbinsäure | 0.3 | 0.1 | 1.0 |
| Enzyme | 0.07 | 0 | 0.3 |
| Hefemilch | 7 | 1 | 50 |
| Hefefiltrat/Wasser | 61.4 | 0 | 70 |
| Total | 100 | | |

**d) Vorteigkonzentrat-Suspension für "helle" Teige**

| Vorteigkonzentrat "helle" Suspension | bevorzugt | minimal | maximal |
|---|---|---|---|
| | % | % | % |
| Weizenkleie-Extrudat oder aleuronreduzierte Weizenkleie | 10 | 4 | 20 |
| Diastase-Malzmehl | 16.5 | 0 | 30 |
| Weizenkleber | 5 | 0 | 7 |
| Ascorbinsäure | 0.3 | 0.1 | 1.0 |
| Enzyme | 0.1 | 0 | 0.3 |
| Hefemilch | 7 | 1 | 50 |
| Hefefiltrat/Wasser | 61.1 | 0 | 70 |
| Total | 100 | | |

Für die Beispiele weist die Hefemilch vorzugsweise einen TS-Gehalt von 12-28%, besonders bevorzugt von 20% auf.

### e) Weitere Beispiele für "dunkle" Vorteigkonzentrate

### Beispiel e1

40 Anteile extrudierte Weizenkleie (160°C; Partikelgrösse 280µ)
10 Anteile Malzmehl
< 1 Anteile Ascorbinsäure
< 1 Anteile Amylase Enzymkomplex
2.5 Anteile Hefe
50 Anteile Wasser

Fest-pastöses Vorteigkonzentrat.

### Beispiel e2

40 Anteile extrudierte Weizenkleie (160°C; Partikelgrösse 280µ)
10 Anteile Malzmehl
< 1 Anteile Ascorbinsäure
< 1 Anteile Amylase Enzymkomplex
2.5 Anteile Hefe
100 Anteile Wasser

Dickflüssiges Vorteigkonzentrat.

### Beispiel e3

40 Anteile extrudierte Weizenkleie (160°C; Partikelgrösse 280µ)
10 Anteile Malzmehl
< 1 Anteile Ascorbinsäure
< 1 Anteile Amylase Enzymkomplex
30 Anteile Hefe
70 Anteile Wasser

Weich-pastöses Vorteigkonzentrat.

### Beispiel e4

40 Anteile extrudierte Weizenkleie (160°C; Partikelgrösse 280µ)
10 Anteile Malzmehl
< 1 Anteile Ascorbinsäure
< 1 Anteile Amylase Enzymkomplex
1 Anteile Hefe
70 Anteile Wasser

Pastöses Vorteigkonzentrat.

Ein vorzugsweise für die "dunklen" Vorteigkonzentrate verwendetes Weizenkleie-Extrudat weist gemäss einer Siebanalyse (Feuchtigkeit 7.3 Mass.-%; Asche (TS) 5.95 Mass.-%) folgende Partikelgrössenverteilung auf:
Abstoss 315 µm 0.7 Mass.-%
Abstoss 200 µm 4.8 Mass.-%
Abstoss 125 µm 27.1 Mass.-%
Abstoss 90 µm 46.1 Mass.-%
Abstoss 63 µm 78.4 Mass.-%.

Für die Vorteigkonzentrate zum Einsatz in "hellen" Teigen wird vorteilhafterweise Weizenkleie-Extrudat oder aleuronreduzierte Weizenkleie eingesetzt. Im Gegensatz zur Kleie, welche in den "dunklen" Konzentraten verwendet wird, ist die modifizierte Kleie für die "hellen" Konzentrate vorzugsweise feiner zerkleinert. Eine vorzugsweise für die "hellen" Vorteigkonzentrate verwendete aleuronreduzierte Weizenkleie weist gemäss einer Siebanalyse folgende Partikelgrössenverteilung auf:
Abstoss 315 µm 0.9 Mass.-%
Abstoss 200 µm 2.6 Mass.-%
Abstoss 125 µm 12.7 Mass.-%
Abstoss 90 µm 47.3 Mass.-%
Abstoss 63 µm 81.6 Mass.-%.

### Verarbeitung

Das neue Vorteigkonzentrat hat bei der Verarbeitung in Backwarenbetrieben signifikante Vorteile, da es anstelle eines konventionellen Vorteiges dem Hauptteig direkt bei der Zubereitung beigefügt werden kann. Bei Versuchen wurde festgestellt, dass die notwendige Hefemenge unter derjenigen liegt, die bei einer konventionellen, direkten Teigführung mit Backmitteln notwendig wäre. Zudem waren die Teige deutlich schneller verarbeitbar als bei Backmittel- und Vorteigverwendung, was zu Zeitersparnis in der Produktion führt. Auch konnte die Wasserschüttmenge erhöht werden, d.h. eine höhere Teigausbeute wird erreicht. Vor allem hier hat das neue Vorteigkonzentrat grosse Vorteile gegenüber dem direkten Konkurrenten Vorteig, weil bei Vorteig bekanntlich eine deutlich geringere Teigausbeute erreicht wird. Die Teigausbeute des neuen Vorteigkonzentrats ist ähnlich wie bei guten Backmitteln.

Das neue Vorteigkonzentrat kann, wie bereits erwähnt, auch als "All-in-One" Produkt angeboten werden, das heisst, es enthält schon die zur Endteigherstellung nötige Menge an Hefe, so dass dem Endteig keine Hefe mehr zugegeben werden muss. In der Bäckerei müssen dem "All-in-One" Produkt nur noch Mehl, Wasser und Salz zudosiert werden.

### Weitere Anwendungsbereiche

In Abhängigkeit vom Mehltyp kann die Weizenkleie in den oben beschriebenen Vorteigkonzentraten auch ganz oder Teilweise durch andere Arten von Getreidekleie, wie zum Beispiel Roggen-, Hafer- und/oder Gerstenkleie ergänzt oder ersetzt werden. Idealerweise wird die modifizierte Kleie im Vorteigkonzentrat so ausgewählt, dass das Endprodukt backtechnisch und geschmacklich optimiert ist.

Da Roggenmehl bekanntlich keinen Kleber hat, muss es durch Säuerung backfähig gemacht werden. Dies kann herkömmlich über eine Mehrstufenführung oder durch Zusatz von Säure oder stark säurehaltigen Backmitteln geschehen. Das neue Vorteigkonzentrat ist kein Säuerungsmittel und daher nur unter Zusatz von bekannten Säuerungsmitteln für Roggenbrote, das heisst für Brote mit einem Roggenmehlanteil von über 60%, geeignet.

Die bereits seit langem bekannten Produkte mit ähnlicher Funktion stammen allesamt aus der Roggen- oder Roggenmischbrotproduktion.

## Patentansprüche

1. Vorteigkonzentrat zur Herstellung von Brot, bestehend aus mechanisch, thermisch oder thermisch-mechanisch modifizierte Getreidekleie und Hefe, wobei die modifizierte Getreidekleie eine im Aleuronanteil reduzierte oder vom Aleuronanteil befreite Getreidekleie ist.

2. Vorteigkonzentrat nach Anspruch 1, **dadurch gekennzeichnet, dass** es zusätzlich Ascorbinsäure enthält.

3. Vorteigkonzentrat nach Anspruch 1, **dadurch gekennzeichnet, dass** die modifizierte Getreidekleie bei 140-180°C, vorzugsweise 160°C, extrudiert ist.

4. Vorteigkonzentrat nach Anspruch 3, **dadurch gekennzeichnet, dass** die Getreidekleie Partikelgrössen von 250-310 µm, vorzugsweise Partikelgrössen um die 280 µm aufweist, zur Verwendung bei der Herstellung von dunklen Teigen.

5. Vorteigkonzentrat nach einem der vorhergehenden Ansprüche 1 bis 4, **dadurch gekennzeichnet, dass** der Anteil an modifizierter Getreidekleie bei 6 bis 50%, vorzugsweise bei 35% für ein pastöses Vorteigkonzentrat und 23% für eine Vorteigkonzentrat-Suspension liegt.

6. Vorteigkonzentrat nach Anspruch 1, **dadurch gekennzeichnet, dass** der Anteil an modifizierter Restkleie 4 bis 30% beträgt, vorzugsweise ca. 15% für ein pastöses Vorteigkonzentrat und 10% für eine Vorteigkonzentrat-Suspension beträgt.

7. Vorteigkonzentrat nach den Ansprüchen 1-3, **dadurch gekennzeichnet, dass** die Getreidekleie Partikelgrössen von 60-125µm, vorzugsweise Partikelgrössen um die 75 µm aufweist, zur Verwendung bei der Herstellung von hellen Teigen.

8. Vorteigkonzentrat nach Anspruch 1 oder 2, **dadurch gekennzeichnet, dass** es Malzmehl, Gluten, Amylase-Enzymkomplex und Wasser umfasst.

9. Vorteigkonzentrat nach Anspruch 1 oder 2, **dadurch gekennzeichnet, dass** die Hefe Presshefe (ca. 28% Trockensubstanz (TS)) oder Hefemilch (20% TS) oder das bei der Presshefe-Herstellung anfallende Filtrat oder ein Gemisch der Vorgenannten umfasst.

10. Endteig, erhältlich durch Verarbeitung eines Vorteigkonzentrates nach einem der Ansprüche 1 bis 9, **dadurch gekennzeichnet, dass** das Vorteigkonzentrat mit Mehl, Wasser und Kochsalz zu einem Endteig vermengt und in direkter Teigführung verarbeitet ist.

11. Endteig gemäss Anspruch 10, **dadurch gekennzeichnet, dass** das Vorteigkonzentrat nach einem der Ansprüche 1 bis 4 unter Verwendung von Weizenmehl und einem Roggenmehlanteil von nicht mehr als 65% zu einem dunklen Endteig vermengt ist.

12. Endteig gemäss Anspruch 10, **dadurch gekennzeichnet, dass** das Vorteigkonzentrat gemäss einem der Ansprüche 1, 7 oder 8 unter Verwendung von Weizenmehl zu einem hellen Endteig vermengt ist.

13. Verfahren zur Herstellung eines Vorteigkonzentrats nach einem der vorhergehenden Ansprüche 1 bis 9, **dadurch gekennzeichnet, dass** zumindest mechanisch oder thermisch oder thermisch-mechanisch behandelte Weizenkleie, mit zumindest reduziertem Aleuronanteil, Hefe und bei Bedarf Ascorbinsäure zu einer dickflüssigen bis festen Paste vermengt werden, die nach dem Vermengen bis zu sechs Stunden bei 26°C bis 32°C fermentiert wird und anschliessend die Fermentation durch Abkühlen auf 2°C bis 6°C stark gehemmt-wird.

14. Verfahren nach Anspruch 13, **dadurch gekennzeichnet, dass** nach dem Vermengen eine Erwärmung des Vorteigkonzentrates auf 25 bis 32°C zugelassen wird und innerhalb von 24 Stunden auf eine Pastentemperatur von etwa 0°C bis 4°C gekühlt wird.

## Claims

1. A pre-dough concentrate for manufacturing bread, consisting of mechanically, thermally or thermomechanically modified cereal bran and yeast, wherein the modified cereal bran is a cereal bran of which the aleuron proportion is reduced or which has no aleuron proportion.

2. The pre-dough concentrate according to Claim 1, **characterised in that** it additionally contains ascorbic acid.

3. The pre-dough concentrate according to Claim 1, **characterised in that** the modified cereal bran is extruded at 140-180 °C, and preferably at 160 °C.

4. The pre-dough concentrate according to Claim 3, **characterised in that** the cereal bran has particle sizes of 250-310µm, and preferably particle sizes of around 280µm, for use in the manufacture of dark doughs.

5. The pre-dough concentrate according to one of the preceding Claims 1 to 4, **characterised in that** the proportion of modified cereal bran is 6 to 50%, and preferably 35%, for a paste-like pre-dough concentrate and 23% for a pre-dough concentrate suspension.

6. The pre-dough concentrate according to Claim 1, **characterised in that** the proportion of modified remaining bran is 4 to 30%, and preferably approx. 15% for a paste-like pre-dough concentrate and 10% for a pre-dough concentrate suspension.

7. The pre-dough concentrate according to Claims 1 to 3, **characterised in that** the cereal bran has particle sizes of 60-125µm, and preferably particle sizes of around 75µm, for use in the manufacture of light doughs.

8. The pre-dough concentrate according to Claim 1 or 2, **characterised in that** it includes malt flour, gluten, amylase enzyme complex and water.

9. The pre-dough concentrate according to Claim 1 or 2, **characterised in that** the yeast includes compressed yeast (approx. 28% dry substance (DS)) or yeast milk (20% DS) or the filtrate which accumulates during the manufacture of the compressed yeast, or a mixture of the above.

10. A final dough which can be obtained by processing a pre-dough concentrate according to one of Claims 1 to 9, **characterised in that** the pre-dough concentrate is mixed with flour, water and cooking salt to form a final dough and is processed using the plain dough method.

11. A final dough according to Claim 10, **characterised in that** the pre-dough concentrate according to one of Claims 1 to 4 is mixed using wheat flour and a rye flour proportion of not more than 65% to form a dark final dough.

12. The final dough according to Claim 10, **characterised in that** the pre-dough concentrate according to one of Claims 1, 7 or 8 is mixed using wheat flour to form a light final dough.

13. A method for the manufacture of a pre-dough concentrate according to one of the preceding claims 1 to 9, **characterised in that** at least mechanically or thermally or thermomechanically modified wheat bran, with at least a reduced aleuron proportion, yeast and, where required, ascorbic acid, are mixed into a viscous to firm paste which is fermented after the mixing for up to six hours at 26°C to 32°C and subsequently the fermentation is starkly inhibited by cooling to 2°C to 6°C.

14. The method according to Claim 13, **characterised in that**, after the mixing, a heating of the pre-dough concentrate to 25 to 32 °C is permitted and cooling takes place within 24 hours to a paste temperature of approximately 0°C to 4°C.

## Revendications

1. Concentré de levain pour la préparation du pain, consistant en du son de céréale modifié mécaniquement, thermiquement ou thermo-mécaniquement et de la levure, où le son de céréale modifié est un son de céréale présentant une proportion réduite en aleurone ou étant libéré de l'aleurone.

2. Concentré de levain selon la revendication 1, **caractérisé en ce qu'**il contient en outre, de l'acide ascorbique.

3. Concentré de levain selon la revendication 1, **caractérisé en ce que** le son de céréale modifié est extrudé à 140-180°C, de préférence à 160°C.

4. Concentré de levain selon la revendication 3, **caractérisé en ce que** le son de céréale présente une taille des particules allant de 250 à 310 µm, de préférence une taille des particules située aux alentours de 280 µm, à utiliser dans la préparation des pâtes foncées.

5. Concentré de levain selon l'une des revendications précédentes 1 à 4, **caractérisé en ce que** la proportion de son de céréale modifié se situe dans l'intervalle allant de 6 à 50%, de préférence à 35% pour un concentré de levain pâteux et à 23% pour une suspension de concentré de levain.

6. Concentré de levain selon la revendication 1, **caractérisé en ce que** la proportion de son modifié résiduel se situe dans l'intervalle allant de 4 à 30%, de préférence à environ 15% pour un concentré de levain et à 10% pour une suspension de concentré de levain.

7. Concentré de levain selon l'une des revendications précédentes 1 à 3, **caractérisé en ce que** le son de céréale présente une taille des particules allant de 60 à 125 µm, de préférence une taille des particules située aux alentours de 75 µm, à utiliser dans la préparation des pâtes claires.

8. Concentré de levain selon la revendication 1 ou 2, **caractérisé en ce qu'**il comprend de la farine de malt, du gluten, un complexe enzymatique amylase et de l'eau.

9. Concentré de levain selon la revendication 1 ou 2, **caractérisé en ce que** la levure comprend de la levure pressée (environ 28% de substance sèche (TS)) ou du lait de levure (20% TS) ou le filtrat obtenu dans la préparation de la levure pressée ou un mélange de ceux-ci.

10. Pâte, obtenue par transformation d'un concentré de levain selon l'une des revendications 1 à 9, **caractérisée en ce que** l'on mélange le concentré de levain avec de la farine, de l'eau et du sel de cuisine en une pâte et l'on transforme dans un traitement direct de la pâte.

11. Pâte selon la revendication 10, **caractérisée en ce que** le concentré de levain selon l'une des revendications 1 à 4 est mélangé en une pâte foncée en utilisant de la farine de froment et une proportion de farine de seigle de pas plus de 65%.

12. Pâte selon la revendication 10, **caractérisée en ce que** le concentré de levain selon l'une des revendications 1, 7 ou 8 est mélangé en une pâte claire en utilisant de la farine de froment.

13. Procédé de préparation d'un concentré de levain selon l'une des revendications précédentes 1 à 9, **caractérisé en ce que** l'on mélange du son de céréale au moins traité mécaniquement ou thermiquement, ou thermiquement-mécaniquement, avec proportion en aleurone au moins réduite, la levure et si nécessaire, l'acide ascorbique, en une pâte épaisse à solide, qui après le mélange, est fermentée pendant jusqu'à six heures de 26°C à 32°C et ensuite, la fermentation est fortement freinée par refroidissement de 2°C à 6°C.

14. Procédé selon la revendication 13, **caractérisé en ce qu'**après le mélange, un chauffage du concentré de levain de 25 à 32°C est permis et dans les 24 heures, on refroidit à une température de pâte d'environ 0°C à 4°C.
